# EUROPÄISCHE PATENTSCHRIFT

(11) **EP 0 641 271 B1**
(45) Veröffentlichungstag und Bekanntmachung des Hinweises auf die Patenterteilung: **23.10.1996**
(21) Anmeldenummer: 93909768.9
(22) Anmeldetag: 18.05.1993
(51) Int. Cl.: B23K 26/04

(54) **VERFAHREN ZUM SCHWEISSEN MIT MEHREREN HOCHENERGIE-SCHWEISSSTRAHLEN**
WELDING PROCESS WITH SEVERAL HIGH ENERGY SOLDERING BEAMS
PROCEDE DE SOUDAGE AVEC PLUSIEURS FAISCEAUX DE SOUDAGE DE HAUTE ENERGIE

(30) Priorität: 20.05.1992 DE 4216643
(43) Veröffentlichungstag der Anmeldung: 08.03.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: BEYER, Eckhard, D-52159 Roetgen (DE); FUNK, Martin, D-52064 Aachen (DE); KALLA, Georg, D-52062 Aachen (DE)
(74) Vertreter: Eichler, Peter, Dipl.-Ing.
(86) Internationale Anmeldenummer: DE9300428
(87) Internationale Veröffentlichungsnummer: WO9323196

(56) Entgegenhaltungen:
- EP-A- 0 266 764
- FR-A- 2 443 897
- US-A- 4 794 231
- PATENT ABSTRACTS OF JAPAN vol. 11, no. 74 (M-568)(2521) 6. M rz 1987

## Beschreibung

Die Erfindung bezieht sich auf ein Schweißverfahren mit Hochenergie-Schweißstrahlen, insbesondere mit Laserstrahlen, bei dem zwei gesteuerte Schweißstrahlen gleichzeitig auf zwei einander gegenüberliegende Werkstückaußenflächen einstrahlen und die Werkstückdicke des Schweißbereichs unter Dampfkapillarenbildung jeweils anteilig aufschmelzen.

Ein Schweißverfahren mit den vorgenannten Merkmalen ist aus der US-A-4 794 231 bekannt. Ein Laserstrahl wird mit einem Strahlteiler in die beiden Schweißstrahlen aufgeteilt, die in einer Ebene ausgerichtet und einander entgegengesetzt gerichtet auf die beiden Werkstückaußenflächen einstrahlen. Die Energie der beiden Schweißstrahlen ist ausreichend, um zwei Schweißbäder zu erzeugen, die sich miteinander vermischen. Infolgedessen kann mit erhöhter Schweißgeschwindigkeit geschweißt werden. Die Nahtqualität ist jedoch noch verbesserungsfähig.

Demgegenüber liegt der Erfindung die Aufgabe zugrunde, ein Schweißverfahren so zu verbessern, daß es beim Strahlschweißen mit hoher Schweißgeschwindigkeit die Nahtqualität insbesondere bei großen Werkstückdicken erheblich zu steigern erlaubt.

Diese Aufgabe wird dadurch gelöst, daß die Schweißstrahlen im Sinne der Bildung einer zwischen den Werkstückaußenflächen durchgängigen Dampfkapillaren gesteuert werden, wobei mindestens einer dieser beiden Schweißstrahlen mit einer kurzzeitigen Prozeßabläufen angepaßten Prozeßregelung in Bezug auf die Position der Dampfkapillaren des anderen der beiden dieselbe durchgängige Dampfkapillare bildenden Schweißstrahlen gesteuert wird.

In Schweißrichtung hintereinanderliegende Schweißstellen eines Schweißbereichs und damit die infolgedessen auftretenden Nachteile können dadurch vermieden werden, daß die Schweißstrahlen von zwei Seiten auf denselben Schweißbereich treffen. Infolgedessen können die Schmelzen beider Schweißstrahlen miteinander in innigen Kontakt kommen, was sich positiv auf die Nahtfestigkeit auswirkt. Von Bedeutung ist darüber hinaus jedoch vor allem, daß die Werkstückdicke von den Schweißstrahlen jeweils anteilig aufgeschmolzen wird. Ist der Werkstoff über die Werkstückdicke homogen, so werden die Schweißstrahlen bei einander parallelen Werkstückaußenflächen zweckmäßigerweise jeweils die Hälfte der Werkstückdicke aufschmelzen. Infolgedessen ist eine stärkere Fokussierung möglich, wenn man davon ausgeht, daß diejenige Länge, auf der die Intensität des Schweißstrahls um die Hälfte absinkt, etwa gleich der aufzuschmelzenden Werkstückdicke sein soll. Infolge der stärkeren Fokussierung ergibt sich eine schlankere Schweißnaht, was gleichbedeutend mit einer entsprechenden Steigerung der Schweißgeschwindigkeit ist.

Soll eine Verbesserung der Tragfähigkeit der Schweißverbindung bewirkt werden, verbunden mit einer Steigerung der Schweißgeschwindigkeit, so ist es vorteilhaft, das Schweißverfahren so durchzuführen, daß die Steuerung der Schweißstrahlen im Sinne der Bildung einer einzigen, zwischen den Werkstückaussenflächen durchgängigen Dampfkapillaren erfolgt. Infolge der durchgängigen Dampfkapillaren ist eine verbesserte Entgasung aus der Schweißkapillaren möglich. Das führt zu einer Verminderung von Poren, Lunkern oder Rissen in demjenigen Bereich, in dem sich die einzelnen Kapillaren der Schweißstrahlen treffen. Auch hieraus resultiert eine Möglichkeit zur Erhöhung der Schweißgeschwindigkeit, insbesondere für den Fall zulässiger verringerter verbindungsfestigkeit.

Wenn die beiden Schweißstrahlen so gesteuert werden, daß sie eine durchgängige Dampfkapillare bilden, so muß außer mit Positions- und Steuerungenauigkeiten der Schweißköpfe auch mit gegenseitiger Beeinflussung der Schweißstellen jedes Schweißstrahls gerechnet werden. Solche gegenseitigen Beeinflussungen sind wegen der kurzzeitigen Prozeßabläufe beim Strahlschweißen entsprechend kurzzeitig. Es ist daher vorteilhaft, wenn mindestens ein Schweißstrahl mit einer schnellen Prozeßregelung für die Position seines Schweißkopfes in Bezug auf die jeweilige Position der Dampfkapillaren eines anderen Schweißstrahls gesteuert wird. Auf diese Weise kann dafür gesorgt werden, daß die Durchgängigkeit der Dampfkapillaren stets optimal ist und eine eventuell erforderliche Ausregelung schnellstmöglich erfolgt, so daß eine negative Beeinflussung der Schweißnaht nur sehr gering ist.

Weil die Entgasung aus einer durchgängigen Dampfkapillaren am besten ist, wenn diese möglichst gerade ist, wird das Verfahren so durchgeführt, daß beide Schweißstrahlen zur Erzielung eines geradlinigen Verlaufs der durchgängigen Dampfkapillaren zwischen den Werkstückaußenflächen entgegen der Schweißrichtung geneigt auf den Schweißbereich einstrahlen.

Um die Ausbildung der Schweißnaht zu beeinflussen, kann es notwendig sein, die Schweißstrahlen zu oszillieren, also in Schweißrichtung und/oder quer dazu hin- und herzuschwenken, und/oder zu modulieren, also die Strahlleistung in zeitlicher Abhängigkeit zu ändern. In diesem Fall ist es vorteilhaft, das Verfahren so durchzuführen, daß die Schweißstrahlen zur Formung der Dampfkapillaren örtlich und zeitlich aufeinander abgestimmt oszilliert und/oder moduliert werden.

Zweckmäßigerweise wird das Verfahren so durchgeführt daß, die Steuerung der Schweißstrahlen in Abhängigkeit von durch die Dampfkapillare hindurchtretender Strahlung und/oder in den Strahlengang eingekoppelter Strahlung anderer Wellenlänge erfolgt. Bei diesem Verfahren wird davon ausgegangen, daß eine optimale Ausregelung vorliegt, wenn die durch die Dampfkapillare hindurchtretende Strahlung maximal ist. Dem liegt die Vorstellung zugrunde, daß der Kapillarenquerschnitt am größten ist, wenn die auf die Schweißstrahlen jeweils zurückgehenden Einzelkapillaren infolge der zutreffenden Positionierung der Schweißköpfe fluchten.

Falls eine Steuerung eines Schweißstrahls nur dann erfolgt, wenn die Leistung der durch die Dampfkapillare hindurchtretenden Strahlung einen Bereich zwischen zwei vorgegebenen anwendungsspezifischen Schwellwerten verläßt, kann davon ausgegangen werden, daß zeitlich kurzfristige Schwankungen der durch die Dampfkapillare hindurchtretende Laserstrahlung keinen Einfluß auf den Regelungsvorgang haben. Kurzzeitige Intensitätsschwankungen od.dgl. für die Prozeßregelung auftretende Störungen können auf diese Weise ausgeblendet werden.

Darüber hinaus wird das Verfahren zweckmäßigerweise so durchgeführt, daß bei einem Unterschreiten eines unteren Schwellwertes zunächst die Position des einen Schweißkopfes gesteuert und dann bedarfsweise die Strahlleistung eines Schweißstrahls oder beider Schweißstrahlen erhöht wird. Es erfolgt also eine Abstufung der Eingriffe in die Regelung derart, daß zunächst die Positionierung der Schweißstrahlen sichergestellt wird, bevor durch eine Beeinflussung der Strahlleistung auf den Schweißprozeß Einfluß genommen wird.

Des weiteren wird das Verfahren zweckmäßigerweise so durchgeführt, daß bei einem Überschreiten des oberen Schwellwertes die Schweißgeschwindigkeit erhöht und/oder die Strahlleistung eines Schweißstrahls oder beider Schweißstrahlen erniedrigt wird. Das erstere dient der Leistungssteigerung, das andere beispielsweise einer Anpassung an die Schweißkontur.

Eine weitere bedeutsame Möglichkeit zur Überwachung des Verfahrens liegt darin, daß die Durchgängigkeit der Dampfkapillaren und/oder deren Position im Schweißbereich und/oder Unregelmäßigkeiten der Schmelzbewegungen mittels Plasmafluktuationen überwacht werden. Dieser Verfahrensweise liegt die Voraussetzung zugrunde, daß Plasmafluktuationen sehr empfindlich auf Prozeßveränderungen reagieren und daher andererseits sehr geeignet dafür sind, als Regelgröße für das Verfahren verwendet zu werden.

Es ist vorteilhaft, wenn zur Detektion der durch die Dampfkapillare hindurchtretenden Strahlen ein strahlungsauskoppelnder Spiegel verwendet wird. Der strahlungsauskoppelnde Spiegel kann an die jeweilige Meßaufgabe angepaßt sein. Es kann beispielsweise ein Beugungs-, ein Scraper-, ein Lochspiegel oder ein teildurchlässiger Spiegel verwendet werden. Die Auswahl hängt von der Art der zu detektierenden Strahlung und deren Strahlungsquerschnitt ab.

Eine weitere vorteilhafte Möglichkeit zur Durchführung des Verfahrens besteht darin, daß eine on-line-Prozeßüberwachung mit optischen und/oder akustischen Sensoren erfolgt, die die Schweißnaht hinter dem jeweiligen Schweißbereich erfassen. In diesem Fall wird das Schweißergebnis überwacht, nämlich die durch das Schweißverfahren hergestellte Schweißnaht. Als optische und/oder akustische Sensoren können alle Meßmittel verwendet werden, die unabhängig von der Ausbildung des Plasmas eine Erfassung der Schweißnahtausbildung ermöglichen.

Mit vorstehendem Verfahren ergibt sich zugleich die Möglichkeit, das Schweißverfahren so durchzuführen, daß die Position der Schweißstrahlen in Abhängigkeit von der Ausbildung der Schweißnaht und/oder deren Lage im verschweißten Werkstück gesteuert wird. Eine derartige Steuerung ist völlig ausreichend, weil sich die Ausbildung der Schweißnaht und/oder deren Lage im verschweißten Werkstück mit den herkömmlichen Meßmitteln sehr präzise und bereits unmittelbar hinter der Schweißstelle erfassen läßt.

Es kann auch sehr vorteilhaft sein, daß Ultraschall und/oder eine Messung der Wärmestrahlung der Schweißnaht und/oder des verschweißten Werkstücks für die Prozeßüberwachung eingesetzt wird. Mit Ultraschall kann die Schweißnaht auf Poren, Risse oder Lunker überwacht werden, wobei die Möglichkeit besteht, die Schweißnaht durch sichthemmende Bauteile hindurch zu überwachen, beispielsweise durch den Gurt eines T-Stoßes hindurch. Mit Hilfe der Wärmestrahlung kann die Oberfläche des Werkstücks direkt überwacht werden und damit Einfluß genommen werden, falls die Abkühlgeschwindigkeit unzulässige Werte aufweist.

Von besonderer Bedeutung ist es, das Schweißverfahren so durchzuführen, daß beim Schweißen mit Laserstrahlung, die im wesentlichen quer zur Schweißrichtung auf den Schweißbereich der Werkstücke gerichtet und gegen eine Werkstückaußenfläche geneigt ist, polarisierte Laserstrahlung verwendet wird, deren Polarisationsrichtung mit der Schweißrichtung einen Winkel von etwa 45° einschließt. Infolge der gewählten Polarisationsrichtung ergibt sich eine Ausbildung der Dampfkapillaren, die von der Einstrahlrichtung quer zur Schweißrichtung ausbiegt. Diese Ausbiegung kann vorteilhaft bei den vorbeschriebenen Verfahren ausgenutzt werden, aber auch generell, wenn T- und I-Stöße od.dgl. zu schweißen sind, bei denen der Laserstrahl nicht senkrecht auf eine der Werkstückaußenflächen fallen kann, weil die Laseroptik eine endliche Ausdehnung hat und dadurch die an sich gewünschte Ausrichtung behindert wird. Die Ausbildung der Dampfkapillaren kann dann dazu benutzt werden, die gewünschte Anordnung der Schweißnaht zumindest annähernd zu erreichen.

Es ist bekannt, einen Laserstrahl mit elliptischem Querschnitt zu verwenden, um bei vorgegebener Relativgeschwindigkeit zwischen Laserstrahl und Werkstück länger auf letzteres einstrahlen zu können, um die Wärmezufuhr zu steigern. Wenn derartiges für beidseitiges Schweißen nutzbar gemacht werden soll, wird zweckmäßigerweise so verfahren, daß beide Schweißstrahlen im Schweißbereich gleich ausgerichteten elliptischen Querschnitt aufweisen.

Das Schweißverfahren ist insbesondere dann vorteilhaft, wenn es zum Schweißen von T- und I-Stößen sowie von Überlapp- und Bördelnähten eingesetzt wird. In diesen Fällen kann ein zuverlässiges Durchschweißen der Werkstücke erreicht werden und es ist möglich, das Schweißverfahren in erforderlicher Weise insbesondere dann anzupassen, wenn für die Stege und Gurte der jeweiligen Profile unterschiedliche Dicken eingesetzt werden müssen und/oder unterschiedliche belastungsgerechte Werkstoffe zu verwenden sind.

Das Verfahren kann dadurch verbessert werden, daß die Werkstücke an vorbestimmten Stellen vorgeheizt und/oder gekühlt werden. Für das Vorheizen und/oder für das Kühlen können alle möglichen bekannten Maßnahmen ergriffen werden.

In Abhängigkeit von der Ausbildung der Schweißnaht kann es sehr vorteilhaft werden, daß zur Herstellung der Schweißnaht Zusatzwerkstoff zugeführt wird und/oder daß Werkstückteile mit bartbehafteten Stoßkanten zum Schweißen verwendet werden. Der Zusatzwerkstoff und/oder der Bart der Stoßkanten werden durch die Hochenergiestrahlung oder durch die Restwärme der Schweißnaht aufgeschmolzen und tragen dazu bei, einen etwaigen Nahteinfall auszugleichen.

Es empfiehlt sich, das Verfahren so durchzuführen, daß T-Stöße mit senkrechtem Steg und waagerechtem Gurt bei etwa horizontal angeordneten Schweißstrahlen geschweißt werden. Ein besonderer Vorteil dieses Verfahrens ist es, daß zugeführter Zusatzwerkstoff beim Schweißen nicht aufgrund einer Schwerkraftwirkung zwischen Steg und Gurt von oben nach unten hindurchfließen kann.

Für den Fall einer Kühlung der Werkstücke kann das Verfahren so durchgeführt werden, daß die Kühlung der Werkstücke durch steg- und/oder gurtpositionierende, strömungsgekühlte Rollen oder Walzen erfolgt. Es ergibt sich eine erhebliche Vereinfachung im Aufbau der Vorrichtung.

Um das Heruntertropfen der Schmelze und damit die Ausbildung einer asymmetrischen Kehlnahtoberfläche zu verhindern, wird das Schweißverfahren so durchgeführt, daß bei tropfgefährdeten Schweißbereichen ein Stützgas von unten auf den Schweißbereich geblasen wird. Das Stützgas kann eine hinreichende Gegenkraft aufbringen, die das Herabtropfen von Schmelze aus dem Schweißbereich verhindert. Als Gas kann beispielsweise ein oxydationsverhinderndes Arbeitsschutzgas verwendet werden. Es ist aber auch möglich, ein Prozeßgas zu verwenden, beispielsweise Argon bzw. ein Gasgemisch aus Argon und anderen Gasen, durch welches eine Einkopplung von Energie in den Schweißbereich erhöht wird. Es kann aber auch Helium oder ein Gasgemisch mit Helium und/oder Wasserstoff angewendet werden, welches die Einkopplung von Energie in ein Plasma oberhalb des Schweißbereichs hemmt.

Von besonderem Vorteil ist es, wenn das Verfahren so durchgeführt wird, daß der Schweißbereich koaxial zum Schweißstrahl mit Helium oder mit einem Gasgemisch mit Helium und/oder Wasserstoff beaufschlagt wird, und daß im Winkel zum Schweißstrahl Argon auf den Schweißbereich geblasen wird. Mit Hilfe des im Winkel zum Laserstrahl aufgeblasenen Argons kann ein Argonplasma ausgebildet und aufgeheizt werden, das zu einer vergrößerten Anschmelzung der Oberfläche führt. Hierdurch wird die Gefahr der Bildung von Einbrandkerben im Rand der Schmelzzone verringert. Durch den gleichzeitigen Auftrag von den Plasmaprozeß dämpfenden Gasen koaxial zum Laserstrahl wird verhindert, daß der Laserstrahl oberhalb des Werkstücks zu stark absorbiert wird.

Wenn das Argongas von vor der Naht auf den Schweißbereich und bedarfsweise auf von hinten zugeführten Zusatzwerkstoff geblasen wird, so erfolgt eine Ausbreitung des Argonplasmas über die erstarrende Schmelze der Schweißnaht, wodurch diese geglättet und die Seiten des Schmelzbereichs angeschmolzen werden, was eine kelchförmige Naht entstehen läßt, die eine erhöhte Verbindungsfestigkeit gewährleistet. Die Ausbreitung des Argonplasmas entgegen der Schweißrichtung kann dazu benutzt werden, den mit Bezug auf die Schweißrichtung von hinten zugeführten Zusatzwerkstoff mit höheren Temperaturen aufzuschmelzen. Darüber hinaus wird die exakte Positionierung des Zusatzwerkstoffs unkritischer.

Wenn erreicht werden soll, daß zwischen den Werkstückaussenflächen gelegene Bereiche des Werkstücks schneller angeschmolzen und besser miteinander verbunden werden sollen, so wird so verfahren, daß das Argongas von vor der Naht in den Schweißspalt und bedarfsweise auf in den Spalt eingebrachten Zusatzwerkstoff geblasen und dort von dem laserstrahlkoaxialen Gas gehalten wird. Es erfolgt eine Aufheizung des Werkstücks vor allem von innen her, die aber durch das laserstrahlkoaxiale Gas außen in Grenzen gehalten wird. Durch den Zusatzwerkstoff kann die zuverlässige Auffüllung des Schweißspalts von innen her gewährleistet werden.

Für das Bearbeiten eines Werkstücks mit gleichzeitiger Anwendung zweier Laserstrahlen ist es für das Bearbeitungsergebnis von Bedeutung, die radiale Intensitätsverteilung dieser Laserstrahlen zu erfassen. Das bietet beispielsweise für das simultane Schweißen mit zwei Laserstrahlen die Möglichkeit, eine einzige durchgehende Dampfkapillare im Werkstück zu gewahrleisten. Dabei wird so verfahren, daß die Strahlen vor einem Bearbeitungsvorgang auf eine Meßstelle ausgerichtet werden, an der nach einem Meßvorgang eine zwischen den Werkstückaußenflächen gelegene Bearbeitungsstelle des Werkstücks angeordnet wird, und daß an dieser Meßstelle die radiale Intensitätsverteilung der beiden Strahlen ermittelt wird. Im Falle einer Schweißbearbeitung sind die Strahlen Laserstrahlen zum Schweißen.

Eine Vorrichtung zur Durchführung eines oder mehrerer der vorbeschriebenen Verfahren ist dadurch gekennzeichnet, daß zwei den einander gegenüberliegenden Werkstückaußenflächen benachbarte Schweißstrahloptiken vorhanden sind, die jeweils einen den Längsversatz und einen den Querversatz eines der Schweißstrahlen beeinflussenden Spiegel aufweisen. Durch entsprechende Positionierung der Spiegel kann erreicht werden, daß die erforderliche Ausrichtung der Schweißstrahlen zueinander mit einfachen Mitteln zuverlässig gewährleistet wird. Eine weitere einfache Verbesserung der Laseroptik ergibt sich dadurch, daß zumindest eine Strahloptik einen Spiegel aufweist, mit dem der Schweißstrahl im wesentlichen quer zur Schweißrichtung gerichtet und gegen eine Werkstückaußenfläche geneigt auf den Schweißbereich zu richten ist. Eine derartige Ausbildung der Vorrichtung ist insbesondere zum Schweißen von T- und I-Stößen geeignet.

Eine Vorrichtung zur Ermittlung der radialen Intensitätsverteilung zweier auf einer Meßstelle ausgerichteter Laserstrahlen ist dadurch gekennzeichnet, daß ein keilförmiger, je einen Teil beider Strahlen ausblendender Reflektor im Bereich der Meßstelle beweglich angeordnet ist. Ein solcher Reflektor gewährleistet die Gleichzeitigkeit der Messung bei beiden Strahlen.

Die Erfindung wird anhand der Zeichnung erläutert. Es zeigt:
- Fig.1: eine perspektivische Darstellung eines Doppel-T-Profils zur Erläuterung des beidseitigen Schweißens,
- Fig.2: ein schematisches Diagramm zur Erläuterung der Abhängigkeit der Schweißtiefe von der Schweißgeschwindigkeit,
- Fig.3a bis d: schematische Darstellungen zur Erläuterung der Verbesserung der Schweißleistung in Abhängigkeit von der Fokussierung des Laserstrahls,
- Fig.4: den Versatz von Dampfkapillaren zweier Schweißstrahlen, die nicht fluchten,
- Fig.5: zwischen den Werkstückaußenflächen durchgängige Schweißkapillaren,
- Fig.6a: eine Aufsicht auf einen Schweißbereich zur Erläuterung der Ausbildung der Dampfkapillaren gemäß Fig.6b,
- Fig.7: eine schematische Darstellung zur Erläuterung des Einsatzes eines Laserstrahls zur Erzeugung einer gekrümmten Schweißnaht für den Fall der Anwendung bei einem T-Stoß,
- Fig.8: eine schematische Darstellung zur Erläuterung der Ausbildung einer Vorrichtung zum Detektieren von die Dampfkapillare durchdringender Strahlung,
- Fig.9,10: unterschiedliche Ausbildungen von Laseroptiken zur Ausrichtung der Schweißstrahlen auf die Werkstücke,
- Fig.11: einen Querschnitt eines Doppel-T-Profils zur Erläuterung eines gleichzeitigen Schweißens mit vier Schweißstrahlen,
- Fig.12: eine perspektivische Darstellung zur Erläuterung einer Vorheizung eines Schweißbereichs,
- Fig.13: eine schematische Darstellung einer Führung eines Stegs und eines Gurts zum Verschweißen eines T-Stoßes,
- Fig.14: eine schematische Darstellung zur Erläuterung des Einsatzes von Gas zum Abstützen von Schmelze aus einem tropfgefährdeten Schweißbereich,
- Fig.15: eine schematische Darstellung zur Erläuterung des Zusammenwirkens zweier unterschiedlichen Einfluß auf den Schweißprozeß nehmender Gase,
- Fig.16: eine schematische Darstellung eines T-Stoßes zur Erläuterung der Auswirkung des Prozeßgases Argon auf die Ausbildung der Schweißnaht,
- Fig.17a: eine perspektivische Darstellung zur Erläuterung der Anwendung zweier unterschiedlich Einfluß auf den Prozeßablauf nehmender Gase im Fall dickerer Schweißspalte,
- Fig.17b: eine schematische Darstellung der Anwendung der Fig.17a mit weiteren Details,
- Fig.18: die Anwendung eines Ultraschallsensors zur Ermittlung von Poren od.dgl. nach Fertigstellung der Naht,
- Fig.19 bis 21: schematische Darstellungen zur Erläuterung der Ermittlung der Lage der Schweißnaht relativ zu den miteinander zu verbindenden Werkstücken,
- Fig.22: eine schematische Darstellung zur Überwachung der Schweißnahtausbildung mit einem optischen Sensor,
- Fig.23: eine schematische Darstellung zur Überwachung des Werkstücks mit Temperatursensoren,
- Fig.24: eine schematische Darstellung zur Erläuterung der Anordnung der Sensoren relativ zum die Laseroptik aufweisenden Schweißkopf,
- Fig.25: eine schematische Darstellung einer Vorrichtung zum simultanen Erfassen der radialen Intensitätsverteilung zweier Laserstrahlen und
- Fig.26a,b: die Schnitte A-A und B-B der Fig.25.

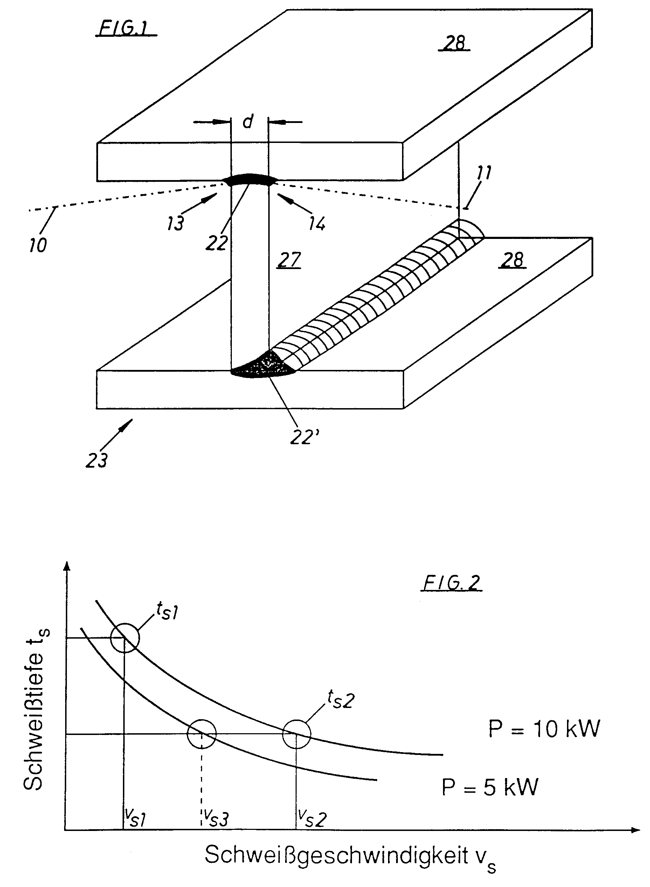

Fig.1 zeigt ein Doppel-T-Profil, dessen beide Gurte 28 mit dem Steg 27 verschweißt sind. Die Verschweißung des unteren Gurts 28 mit dem Steg 27 ist in herkömmlicher Weise ausgeführt, also von einer Seite, so daß sich eine entsprechende einseitige Naht 22' ergibt. Es ist ersichtlich, daß ein vergleichsweise großer Querschnitt aufgeschmolzen werden muß. Die Naht 22' ist extrem unsymmetrisch. Es besteht die Gefahr des Verzugs des rechten Winkels. Die Naht hat auf der Schweißseite eine voluminöse, durch Zusatzwerkstoff zu erzielende Schweißraupe. Die Schweißgeschwindigkeit ist vergleichsweise gering. Demgegenüber ist der obere Gurt 28 mit dem Steg 27 durch zwei Schweißstrahlen 10,11 verschweißt. Es ergibt sich eine kleinvolumige, symmetrische Ausbildung der Schweißnaht 22 zwischen den beiden einander gegenüberliegenden Werkstückaußenflächen 13,14. Die Querschnittsausbildung der Schweißnaht 22 ist der Geometrie des verschweißten Werkstücks 23 offenbar optimal angepaßt. Das Schweißen mit zwei Schweißstrahlen 10,11 eignet sich infolgedessen insbesondere für Werkstücke, die in I- oder T-Konfiguration oder im Überlapp-Stoß oder mit einer Bördelnaht verschweißt werden. Unter I-Stoß wird der stumpfe Stoß zweier Werkstücke verstanden, die in einer Ebene liegen.

Eine Besonderheit derartigen Schweißens liegt darin, daß die Schweißgeschwindigkeit größer ist, als wenn nur mit einem einzigen Schweißstrahl gearbeitet würde. Das ergibt sich aus Fig.2. Diese zeigt die Schweißtiefe tₛ in Abhängigkeit von der Schweißgeschwindigkeit vₛ für zwei unterschiedliche Leistungen P eines Laserstrahls. Für die Kennlinie P=10kW ist ersichtlich, daß bei einer Schweißtiefe tₛ₁ nur mit einer vergleichsweise geringen Schweißgeschwindigkeit vₛ₁ geschweißt werden kann. Bei einer nur halb so großen Schweißtiefe tₛ₂ wäre die Schweißgeschwindigkeit vₛ₂ mehr als drei mal so groß. Zugleich ist aber ersichtlich, daß bei einer Schweißtiefe von tₛ₂ mit einer Leistung von P=5kW noch mit einer Schweißgeschwindigkeit vₛ₃ geschweißt werden könnte, die größer als doppelt so hoch ist, wie die Schweißgeschwindigkeit vₛ₁. Diese Schweißgeschwindigkeit kann genutzt werden, wenn die Schweißnaht 22 mit Schweißstrahlen der Leistung P=5kW von beiden einander gegenüberliegenden Werkstückaußenflächen 13,14 geschweißt wird. Die gesamte Werkstückdicke d wird jeweils anteilig von den beiden Schweißstrahlen 13,14 aufgeschmolzen.

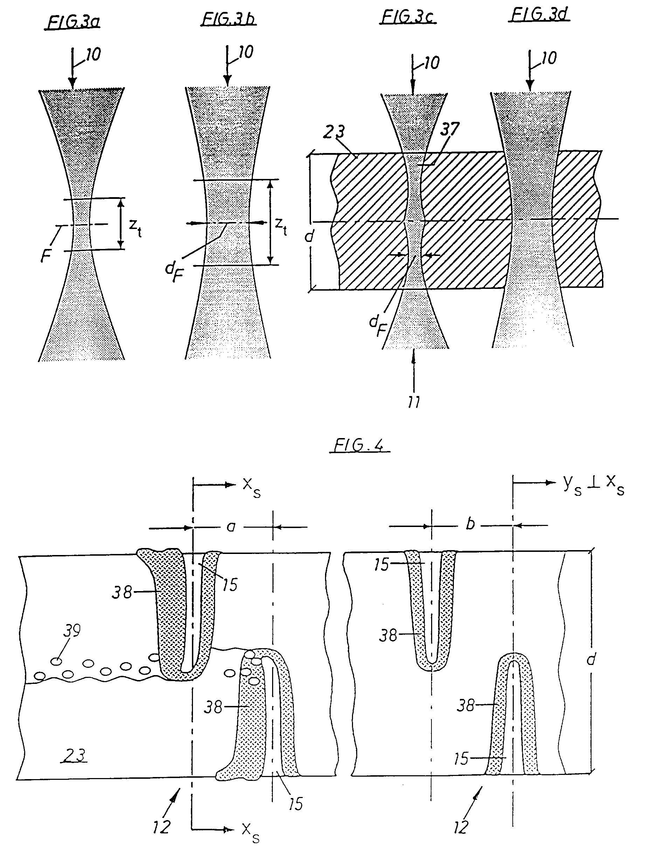

In den Fig.3a bis 3d ist dargestellt, wie sich die Aufteilung eines Schweißstrahls 10 bzw. die Anwendung zweier Strahlen oder Teilstrahlen 10,11 beim Schweißen eines Werkstücks 23 mit der Werkstückdicke d im Einzelnen auswirkt. Die Fig.3a,b zeigen als Schweißstrahl 10 einen Längsschnitt eines fokussierten Laserstrahls. Definitionsgemäß ist zₜ diejenige Länge, über die die Intensität der Laserstrahlung bis zum Fokus F um die Hälfte absinkt. Es ist ersichtlich, daß der Fokusdurchmesser d_{F} umso größer ist, je größer die Länge zₜ ist. Da für das Schweißen größerer Werkzeugdicken d größere Längen zₜ benötigt werden, wird die Schweißkapillare im Werkstück 23 umso dicker, je größer d_{F} wird. Beim Schweißen der gesamten Werkstückdicke d mit zwei Schweißstrahlen 10,11 von zwei einander gegenüberliegenden Werkstückaußenflächen aus kann gemäß Fig.3c erreicht werden, daß die Schweißkapillare 37 nur eine vergleichsweise geringe Dicke hat.

Beim Schweißen mit zwei Schweißstrahlen 10,11 muß dafür gesorgt werden, daß die Schweißstrahlen im Schweißbereich 12 einander möglichst genau gegenüberliegen. Das gilt insbesondere für das Strahlschweißen, bei dem jeder Schweißstrahl eine Dampfkapillare 15 ausbildet, deren aus verdampftem Werkstoff bestehender Dampf möglichst vollständig aus der Dampfkapillaren 15 ins Freie ausströmen muß, damit sich im Inneren des Werkstücks 23 keine Poren oder Lunker bilden. Naturgemäß gelingt diese Entgasung aus den am tiefsten gelegenen Bereichen der Dampfkapillaren am schlechtesten. Hier besteht daher die Gefahr, daß das Gas in die Schmelze eingeschlossen wird und es infolgedessen zu den unerwünschten Poren 39 kommt. Fig.4 zeigt zwei Schmelzzonen 38, die gemäß dem linken Teil dieser Darstellung einen Längsversatz a in der Schweißrichtung x_{S} haben. Die Schmelzzonen 38 überlappen sich zwar über die Dicke d des Werkstücks 23, ihre Dampfkapillaren 15 sind jedoch ersichtlich nicht durchgängig. Im rechten Teil der Fig.4 ist ersichtlich, daß die Dampfkapillaren 15 bzw. die Schmelzzonen 38 einen Querversatz b aufweisen, also in der Richtung y_{S} versetzt sind, welche senkrecht zur Schweißrichtung x_{S} gegeben ist. Ein derartiges gleichzeitiges Schweißen mit zwei Schweißstrahlen im Längs- und/oder Querversatz a,b kann nur dann akzeptiert werden, wenn an die Schweißnaht bzw. an die Verbindungsfestigkeit des Werkstücks 23 nur vergleichsweise geringe Anforderungen gestellt werden, die also auch beispielsweise die Bildung von Poren 39 zulassen.

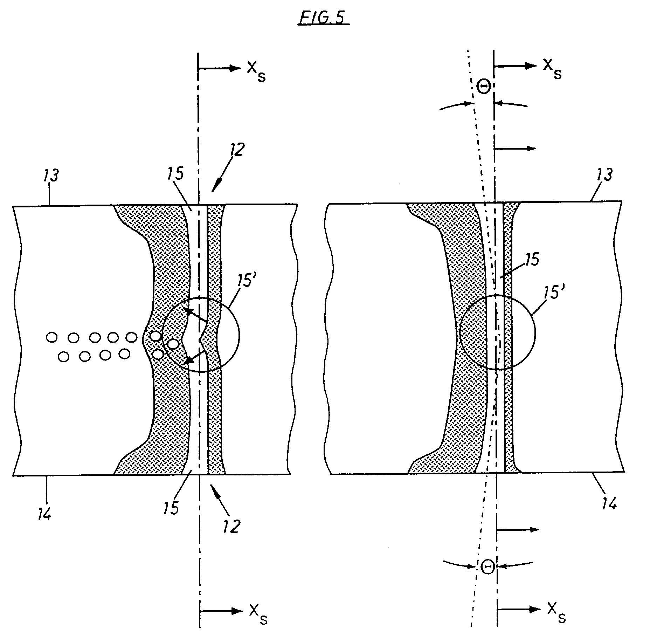

Ein entscheidender Vorteil für die Naht- bzw. Verbindungsgüte ergibt sich dann, wenn die Steuerung der Schweißstrahlen 10,11 so erfolgt, daß sich eine einzige, zwischen den Werkstückaußenflächen 13,14 durchgängige Dampfkapillare 15 ergibt. In diesem Fall können die innenliegenden Bereiche 15' der Dampfkapillaren 15 wesentlich besser entgasen. Eine Verminderung der Schweißfehler ist die Folge. Die linke Darstellung der Fig.5 zeigt allerdings, daß insbesondere bei höheren Schweißgeschwindigkeiten im Mittelbereich 15' der Dampfkapillaren 15 Unförmigkeiten in deren Ausbildung auftreten können. Diese Unförmigkeiten ergeben sich als Folge des Umstands, daß die Strahlung an der in Schweißrichtung x_{S} gelegenen Schweißfront im oberen Bereich der Dampfkapillaren 15 besser eingekoppelt wird, als im Mittelbereich 15'. Insofern ist hier die Gefahr der Bildung von Schweißfehlern vergleichsweise größer, als in den äußeren Endbereichen der Dampfkapillaren 15. Daher werden die Schweißstrahlen 10,11 gemäß Fig.5, rechte Darstellung, entgegen der Schweißrichtung x_{S} um den Winkel Θ geneigt. Es ergibt sich ein geradliniger Verlauf der durchgängigen Dampfkapillare 15 zwischen den Werkstückaußenflächen 13,14 mit entsprechend verringerter Gefahr der Schweißfehlerbildung im Mittelbereich 15'.

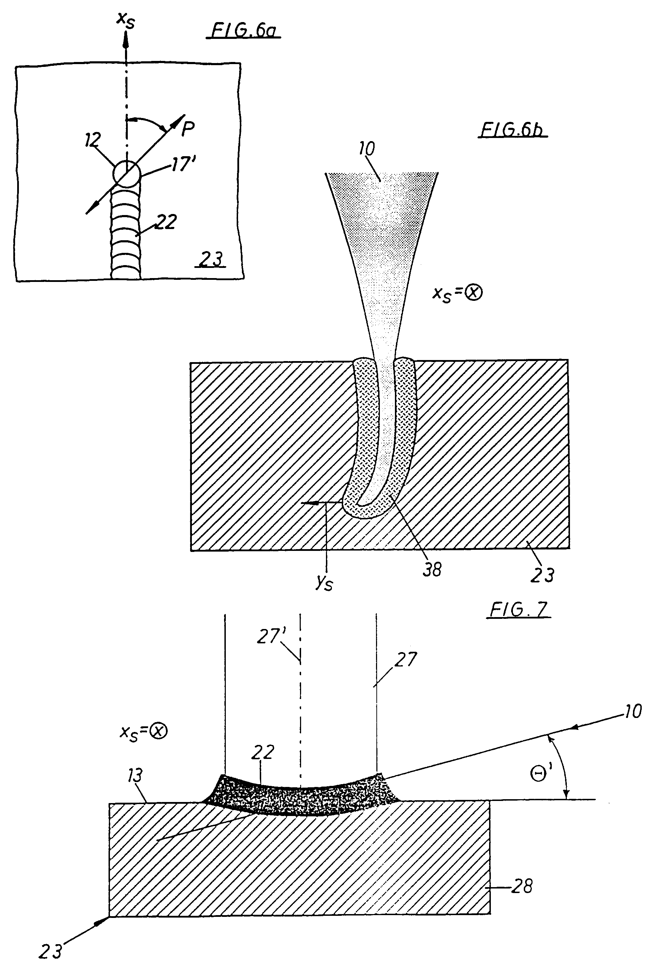

Fig.6a zeigt eine Aufsicht auf ein Werkstück 23, bei dem mit einem Schweißstrahl in einem Schweißbereich 12 eine Schweißnaht 22 hergestellt wird. Eine Besonderheit bei diesem Schweißverfahren ist es, daß die verwendete Laserstrahlung polarisiert ist. Die Polarisationsrichtung p ist gemäß Fig.6a um 45° gegen die Schweißrichtung x_{S} geneigt. Infolgedessen ergibt sich aufgrund der Reflexionsverhältnisse bzw. aufgrund der Absorptionsverhältnisse für die um 45° polarisierte Laserstrahlung des Schweißstrahls 10 in der Dampfkapillaren der dargestellte gekrümmte Verlauf der Schmelzzone 38 mit einer Komponente y_{S} quer zur Schweißrichtung x_{S}. Diese Formung der Schmelzzone 38 kann beim Schweißen von Stößen bzw. von gestoßen angeordneten Werkstücken vorteilhaft ausgenutzt werden. Fig.7 zeigt das Verschweißen eines Gurtes 28 mit einem Steg 27, bei dem der Laserstrahl 10 um einen Winkel Θ' der Werkstückaußenfläche 13 geneigt ist. Die in Fig.6b dargestellte Schmelzzone 38 entspricht dann in Fig.7 etwa der Hälfte der Schweißnaht 22, deren andere Hälfte von einem zur Stegachse 27' spiegelsymmetrischen, nicht dargestellten Schweißstrahl erzeugt wird.

Um die Schweißstrahlen 10,11 so auszurichten, daß sich eine durchgängige Dampfkapillare 15 zwischen den Werkstückaußenseiten 13,14 des Werkstücks 23 ergibt, müssen diesen Werkstückaußenflächen 13,14 benachbarte Schweißstrahloptiken 33,34 vorhanden sein, die den ihnen jeweils zugeordneten Schweißstrahl 10,11 auszurichten erlauben. Diese Strahloptiken 33,34 sind in jeweils einem nicht dargestellten Schweißkopf angeordnet, dessen Position gesteuert werden kann. Die Steuerung erfolgt entsprechend einem Meßergebnis, welches vorteilhafterweise darauf basiert, daß durch die Dampfkapillare hindurchtretende Strahlung gemessen wird. Fig.8 zeigt, daß Laserstrahlung 17 über einen Spiegel 24' der Strahloptik 33 auf einen fokussierenden Spiegel 35 gelenkt wird, der die Laserstrahlung 17 des Laserstrahls 10 durch das Werkstück 23 hindurch auf den fokussierenden Spiegel 35 der auf der anderen Werkstückaußenseite 14 gelegenen Strahloptik 34 lenkt, von wo aus durch die nicht dargestellte Dampfkapillare hindurchgetretene Laserstrahlung 17' auf einen strahlungsauskoppelnden Spiegel 24 gelangt, von dem aus die durch die Dampfkapillare 15 hindurchgetretene Laserstrahlung 17' auf ein Meßinstrument 39 ausgekoppelt wird. Dem Meßergebnis entsprechend kann die Steuerung der Position des Schweißkopfes für die Laserstrahlung 17 mit einer schnellen Prozeßregelung so erfolgen, daß die hindurchtretende Laserstrahlung stets maximal ist.

Die Auskopplung der durch die Dampfkapillare 15 hindurchtretenden Strahlung 17' aus dem Strahlengang ist erforderlich, damit dem Werkstück 23 die Strahlung des zweiten Schweißstrahls mit Hilfe der Spiegel 24,35 der unteren Optik 34 zugeführt werden kann. Als auskoppelnder Spiegel 24 kommt beispielsweise ein Scraper-Spiegel, ein Loch-Spiegel oder ein teildurchlässiges Fenster infrage. Dargestellt ist ein Beugungsspiegel, welcher in der in der deutschen Patentanmeldung DE 40 06 622 A1 beschriebenen Weise in der Lage ist, Strahlungsanteile vorbestimmter Frequenz auszukoppeln, ohne die Reflexion der der Schweißstelle 12 zuzuführenden Laserstrahlung zu beeinträchtigen. Ein solcher Beugungsspiegel 24 ist insbesondere dann von Vorteil, wenn eine Strahlung 18 anderer Wellenlänge in den Laserstrahlengang eingekoppelt wird. Insbesondere für diesen Fall ist der Spiegel 24' als Beugungsgitterspiegel dargestellt, der unter dem Winkel φ eingestrahlte Strahlung 18 in den Laserstrahlengang einkoppelt, deren die Dampfkapillare 15 durchdringender Anteil 18' von dem auskoppelnden Spiegel 24 auf die Meßeinrichtung 39 unter demselben Winkel φ gelenkt wird.

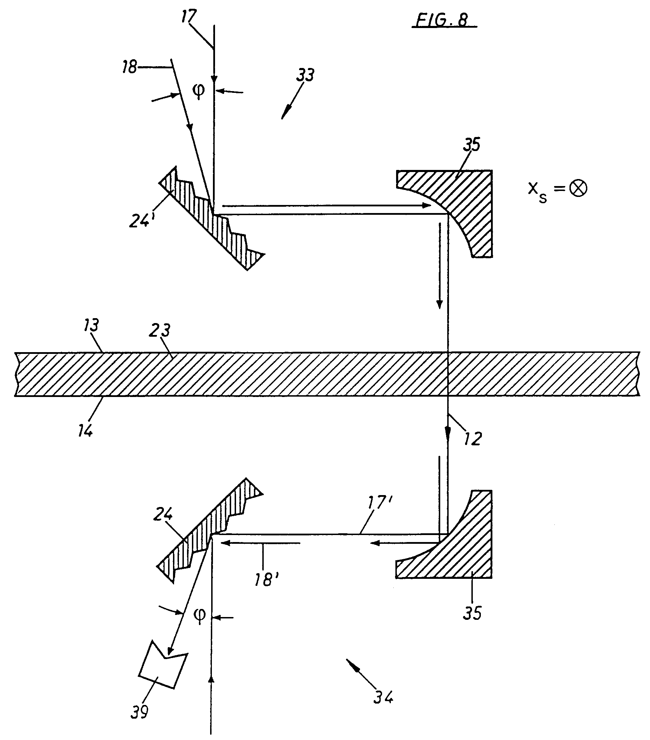

Fig.9 zeigt die Laseroptiken 33,34 der Fig.8 im Hinblick auf Ihre Möglichkeiten, den Längsversatz a und den Querversatz b gemäß der Fig.4 zu beeinflussen. Die Beeinflussung des Querversatzes b erfolgt in einfacher Weise dadurch, daß der Spiegel 35 der Optik 33 in seiner Entfernung zum Spiegel 24' verstellt wird. Die Größe und die Richtung der Verstellung β entsprechen exakt der Richtung und der Größe des Versatzes b. Wird der Spiegel 24' um die Mittelachse der Strahlung 17 um den Wert α verstellt, so wird dadurch nur der Längsversatz a beeinflußt, wenn der Spiegel 35 nicht verstellt wird. Ein Verkippen des Spiegels 35 um den Betrag ϑ ergibt ein Verschwenken des Schweißstrahls 10 um den Winkel Θ, vgl. Fig.5.

Fig.10 zeigt etwas abweichend ausgebildete Strahloptiken 33',34', die einen weiteren Spiegel 36 aufweisen, der mit einem unverkippbaren Spiegel 35 zusammenwirkt. Der Spiegel 36 kann vertikal zur Werkstückaußenfläche 13 verstellt werden, so daß sich der auf die Schweißstelle 12 treffende Schweißstrahl 10 infolge der konkaven Ausbildung der reflektierenden Fläche des Spiegels 36 in der Darstellungsebene schrägstellt, also im Sinne einer Erzeugung eines Winkel Θ.

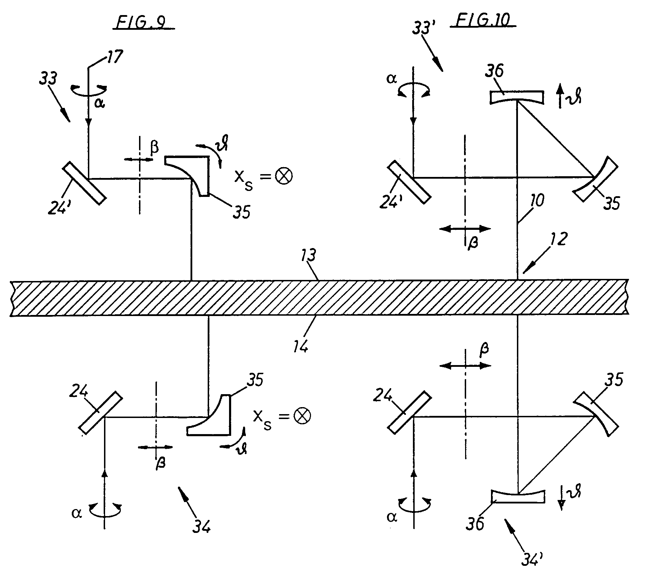

Fig.11 erläutert das Schweißen eines Doppel-T-Profils als Werkstück 23 mit vier Schweißstrahlen 10,11,10',11'. Die Schweißstrahlen 10,11 dienen dem Verschweißen des oberen Gurtes 28 mit dem oberen Ende des vertikal angeordneten Steges 27, während die Schweißstrahlen 10',11' den unteren Gurt 28 mit dem unteren Ende des Stegs 27 verschweißen. Sämtliche vier Schweißstrahlen 10,11,10',11' sind etwa horizontal angeordnet. Alle Schweißstellen sind so angeordnet, daß Zusatzwerkstoff nicht infolge Schwerkrafteinfluß durch den Nahtbereich hindurchfließen kann, welche Gefahr bestünde, wenn das Doppel-T-Profil oder ein anderer Stoß mit gegenüber Fig.11 um 90° gedrehter Anordnung geschweißt würde.

Fig.12 erläutert das Vorheizen eines Stegs 27 und eines Gurts 28 mit einer beispielsweise induktiven Vorheizung, bevor die Naht 22 mit dem Strahl 10 hergestellt wird. Vorheizung kann auch mit einem Heizdraht oder durch Einsatz reaktiver Gase bewirkt werden.

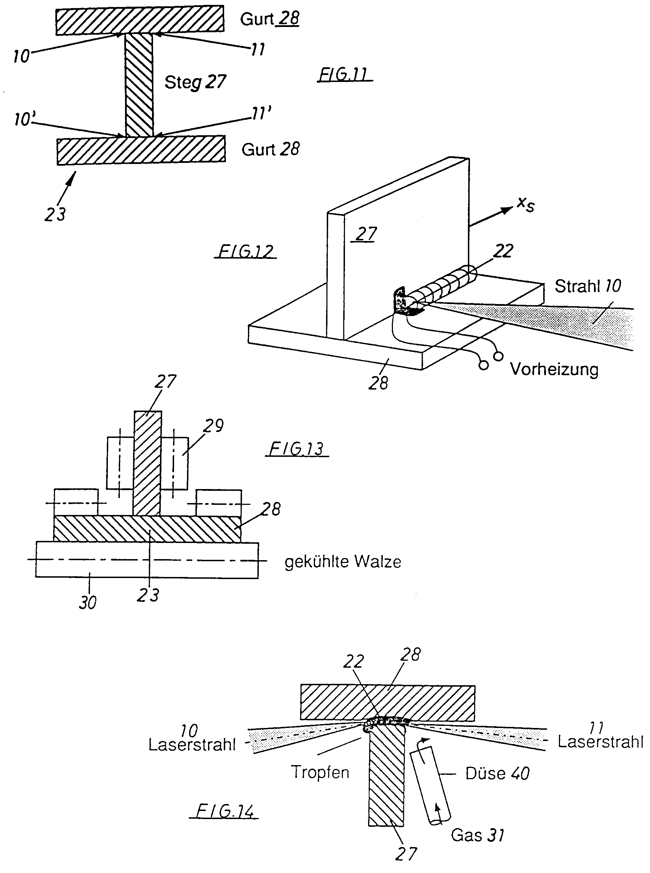

Fig.13 erläutert das Kühlen der Werkstücke 23 durch Rollen 29 oder Walzen 30. Diese Rollen bzw. Walzen 29,30 sind an den Werkstücken bzw. an deren Stegen und Gurten positioniert und können strömungsgekühlt sein. Die Rollen bzw. Walzen 29,30 können außer zur Kühlung noch der Positionierung des Stegs 27 bzw. des Gurts 28 dienen, insbesondere wenn diese erwärmt in Schweißlage geführt werden.

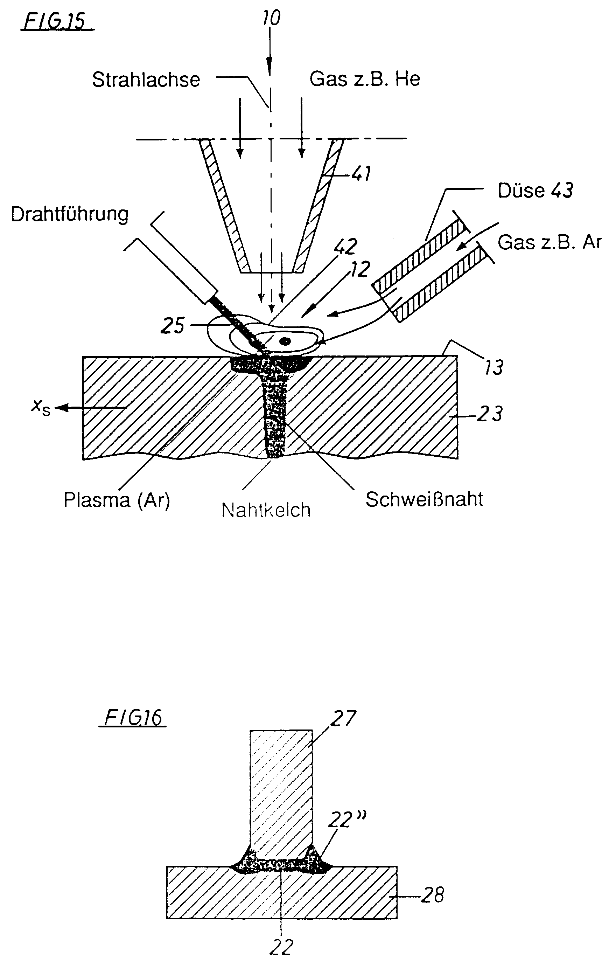

Fig.14 zeigt das gleichzeitige Verschweißen eines Gurts 28 mit einem Steg 27 und erläutert auf der linken Seite der Schweißnaht 22 die Gefahr der Tropfenbildung und infolgedessen einer unsymmetrischen Nahtausbildung. Um dem zu begegnen, ist eine Düse 40 vorgesehen, mit der Gas 31 auf den Schweißbereich 12 geblasen wird. Dieses Gas wirkt als Stützgas, hält also die Schmelze im Schweißbereich 12.

Fig.15 zeigt die schematische Anordnung einer Düse 41, die die Laserstrahlung 10 umgibt und der Zuleitung von Gas dient. Dieses Gas dient der Beeinflussung des Plasmas 42, welches sich infolge der Einwirkung der Laserstrahlung des Strahls 10 auf der Werkstückaußenfläche 13 des Werkstücks 23 bildet. Des weiteren ist in Fig.15 die Zuführung von Zusatzwerkstoff 25 dargestellt, welcher als Draht ausgebildet ist. Der Zusatzwerkstoff ragt bis in die Schweißstelle 12 hinein, wo er spätestens aufgeschmolzen wird. Des weiteren ist eine kurz vor der Schweißstelle 12 mündende, unter einem Winkel angeordnete Düse 43 vorgesehen, mit der ein weiteres Gas in den Schweißbereich 12 geblasen wird. Dieses Gas ist z.B. Argon. Infolgedessen bildet sich als Plasma ein Argonplasma, welches sich auf der Werkstückaußenfläche 13 in Richtung seiner Strömung ausbreitet. Infolgedessen wird das Argonplasma auch auf den Zusatzwerkstoff 25 geblasen und schmilzt diesen auf. Infolge der Verteilung des Argonplasmas auf der Werkstückaußenfläche 13 ergibt sich eine Vergrößerung der Aufschmelzung des Werkstücks 23 im Oberflächenbereich und daher eine kelchförmige Nahtausbildung, welche in Fig.15 T-förmig dargestellt ist. Es ist dies eine Querschnittsdarstellung, wobei sich versteht, daß sich die Schweißnaht in der Richtung x_{S} erstreckt. Demgemäß wird das Argongas in Bezug auf diese Schweißrichtung x_{S} von vorn bzw. von vor der Naht auf den Schweißbereich 12 geblasen, während der Zusatzwerkstoff 25 von hinten zugeführt wird.

Fig.16 zeigt die verbesserte Ausbildung einer Schweißnaht 22 zwischen einem Steg 27 und einem Gurt 28 bei Anwendung von Zusatzwerkstoff, der mit Hilfe eines Gases aufgeschmolzen wird. Es ergibt sich ein abgerundeter, schwingfestigkeitsmäßig sehr günstiger Nahtrandbereich 22'' mit verringerter Gefahr von Einbrandkerben.

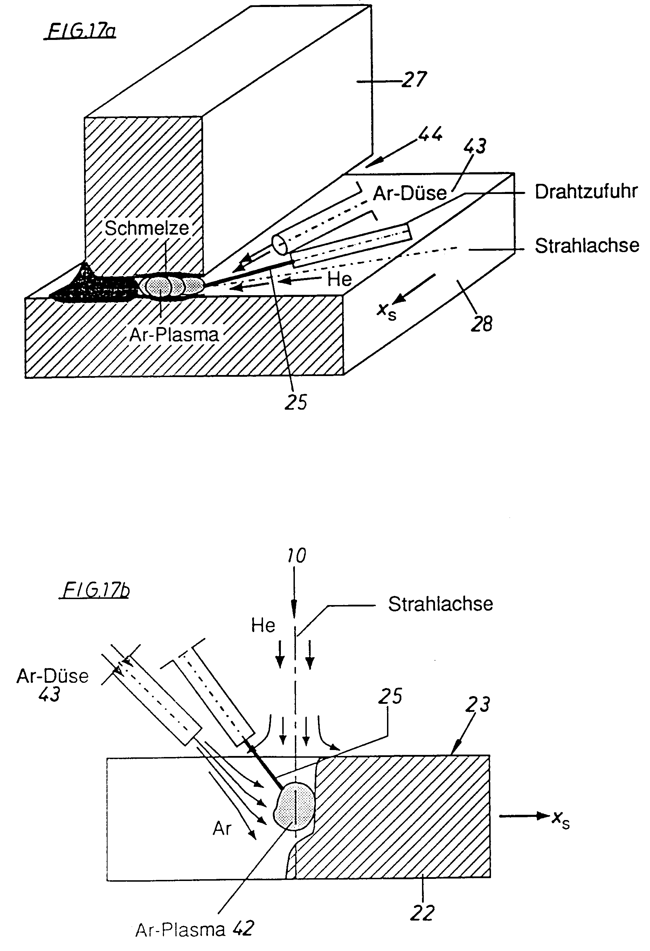

Die Fig.17a,b erläutern insbesondere das Verschweißen dikker Stege 27 und Gurte 28 bzw. Werkstücke mit dickem Schweißspalt 44. Der Schweißspalt 44 muß mit Zusatzwerkstoff 25 aufgefüllt werden, der auch in die Spaltmitte gelangen muß. Hierzu ist vorgesehen, daß die Düse 43 Argongas in die Spaltmitte bläst, wo sich infolge der Einwirkung der Laserstrahlung des Laserstrahls 10 ein Argonplasma 42 ausbildet. Dieses schmilzt die Wände des Spalts an und den Zusatzwerkstoff 25 auf. In diesem Falle erfolgen die Zufuhr des Argongases und die Zufuhr des Zusatzwerkstoffs jeweils von vor der Naht 22, wobei das außerdem angewendete Helium od.dgl. dafür sorgt, daß eine zu starke Absorption der Laserstrahlung oberhalb des Werkstücks 23 vermieden wird. Wie auch im Falle der Fig.15 wird dadurch die Gefahr der Bildung von Einbrandkerben verringert. Das Verfahren wird insbesondere beim Mehrlagenschweißen eingesetzt.

Zur Durchführung des Schweißverfahrens und zur Überwachung des Schweißergebnisses ist es erforderlich, sich etwa ausbildende Fehler zu ermitteln. Hierzu kann bei der Prozeßüberwachung Ultraschall eingesetzt werden. Fig.18 zeigt einen schematisch dargestellten Sensor 45 für Ultraschall, mit dem etwa vorhandene Poren 39 ermittelt werden können. Die Ermittlung erfolgt im Schweißnahtbereich hinter dem jeweiligen Schweißbereich 12 so dicht, daß eine on-line-Prozeßüberwachung möglich ist, die einen Qualitätsabfall sofort detektiert. Mit Hilfe des Sensors 45 kann aber entsprechend den Fig.19 bis 20 auch die Ausbildung bzw. die Lage der Schweißnaht 22 detektiert werden. Es ist beispielsweise bei gestoßen angeordneten Steg/Gurt-Bauteilen möglich zu ermitteln, ob die Naht 22 ordnungsgemäß hergestellt wird, oder etwa zu tief im Steg 27 liegt, vgl. Fig.20, oder zu tief im Gurt 28 liegt, vgl. Fig.21. Je nach dem kann die Strahllage beeinflußt werden, beispielsweise durch Verkippen der Spiegel 35,36 der Fig.8 bis 10.

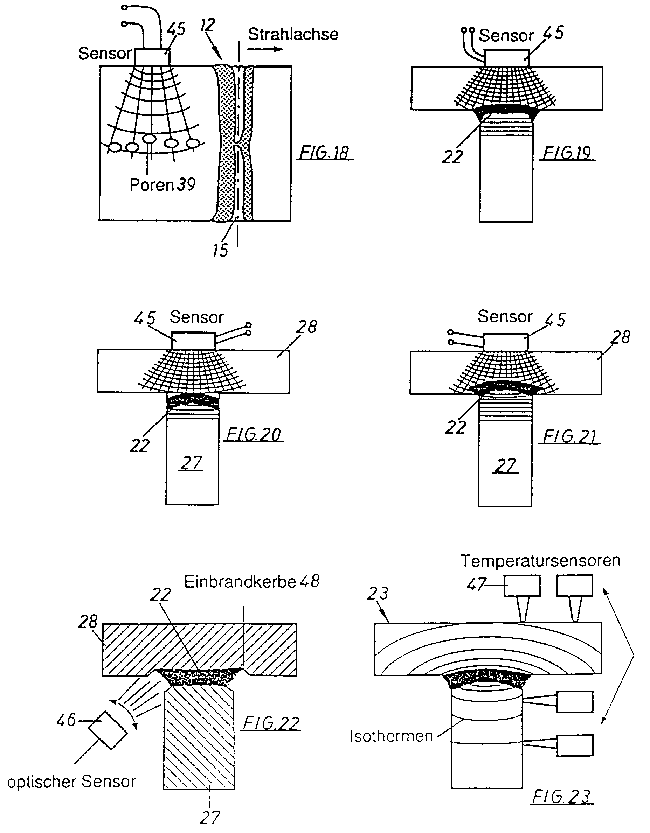

Anstelle eines Ultraschallsensors 45 können auch andere akustische oder optische Sensoren eingesetzt werden. Fig.22 zeigt die Verwendung eines optischen Sensors 46 zur Überwachung der Naht 22 einer Steg/Gurt-Verbindung, an der sich Einbrandkerben 48 ausbilden. Derartige schwingfestigkeitsmindernde Einbrandkerben 48 müssen vermieden werden. Ihre Ermittlung dicht hinter der Schweißstelle 12 ermöglicht es, eine hinreichende Prozeßregelung durchzuführen, indem beispielsweise mehr Zusatzwerkstoff 25 zugeführt wird.

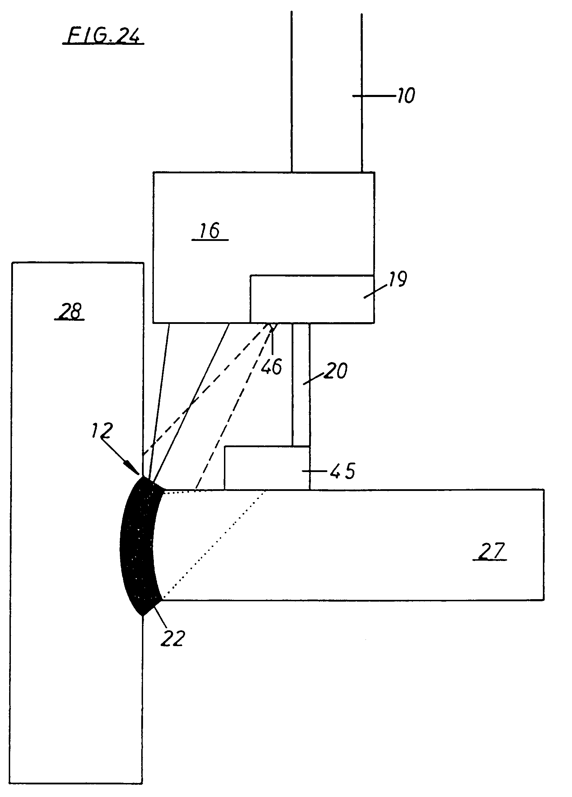

Fig.23 zeigt, daß die Wärmestrahlung der Schweißnaht 22 bzw. des verschweißten Werkstücks 23 für die Prozeßüberwachung eingesetzt wird. Temperatursensoren 47 erfassen die örtliche Wärmeverteilung, aus der auch auf die Ausbildung der Schweißnaht geschlossen werden kann, so daß eine dementsprechende Regelung bzw. Steuerung des Schweißprozesses ermöglicht wird. Mit Hilfe der Temperaturüberwachung der Oberfläche der Naht und/oder der Nahtumgebung und/oder der Oberfläche des Gurtes wird aber auch die Abkühlgeschwindigkeit überwacht.

Um zu erreichen, daß die Schweißnaht 22 hinter dem Schweißbereich 12 zuverlässig und in jeweils fester Relation zum zugehörigen Laserstrahl überwacht wird, ist eine feste Zuordnung der Meßinstrumente zum Schweißkopf 16 vorgesehen. Fig.24 zeigt beispielhaft in schematischer Darstellung einen solchen Schweißkopf, der die in den Fig.8 bis 10 dargestellte Laseroptik enthält, z.B. 33, welche den Laserstrahl 10 auf den Schweißbereich 12 fokussiert. Zugleich ist an dem Schweißkopf 16 eine Sensorik 19 vorhanden, mit der der Schweißnahtbereich von dem optischen Sensor 46 überwacht wird. Auch der Ultraschallsensor 45 ist mit dem Schweißkopf 16 durch eine feste geometrische Zuordnung 20 mechanisch verbunden.

Vorstehend wurde beschrieben, daß die Schweißstrahlen Laserstrahlen sind. Es können jedoch auch andere Hochenergiestrahlen eingesetzt werden, beispielsweise Elektronenstrahlen.

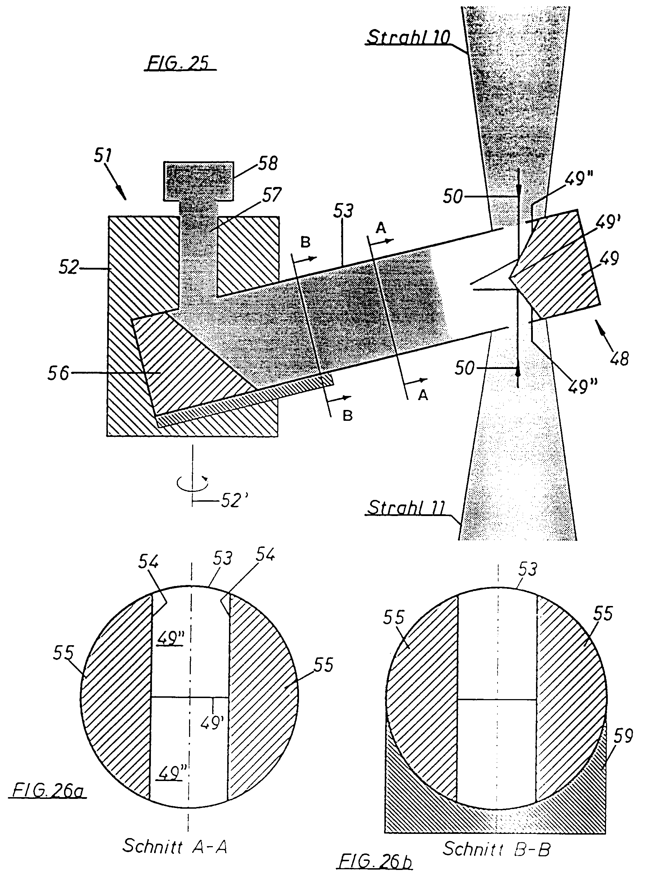

Fig.25 zeigt zwei Strahlen 10,11, also beispielsweise zwei dem Schweißen dienende Laserstrahlen, die auf eine Meßstelle 48 ausgerichtet sind. Die Meßstelle 48 fällt mit einer Bearbeitungsstelle des Werkstücks zusammen, also beispielsweise mit der Mitte zwischen den beiden Werkstückaußenflächen 13,14. Es versteht sich jedoch, daß die Meßstelle auch außermittig angeordnet werden kann, wenn der Bearbeitungsvorgang dies erfordert oder wenn die Strahlen 10,11 unterschiedlicher Leistung sind.

Um an dieser Meßstelle die radiale Intensitätsverteilung der beiden Strahlen 10,11 zu ermitteln, ist ein keilförmiger Reflektor 49 vorhanden, dessen in einer Keilkante 49' zusammenstoßenden Keilflächen 49'' jeweils einen Anteil des Strahls 10 und des Strahls 11 entsprechend dem Strahlengang 50 im wesentlichen in dieselbe Richtung auf eine Meßeinrichtung 51 lenken. Diese Meßeinrichtung ist in ihren Grundzügen in der DE 35 32 047 C2 beschrieben. Wesentlich ist, daß ein Träger bzw. eine rotierende Nadelhalterung 52 für eine als Röhrchen ausgebildete Meßnadel 53 vorhanden ist, in welches der Reflektor 49 fest eingebaut ist. Der Träger 52 kann sich um seine Achse 52' drehen, so daß der Reflektor 49 radial durch beide Laserstrahlen 10,11 bewegt werden kann. Dazu ist es zweckmäßig, daß die Achse 52' im wesentlichen parallel zu den Strahlachsen ist. Die Strahlachsen brauchen jedoch nicht koaxial zu verlaufen. Wichtig ist, daß der Reflektor 49 aus beiden Strahlen 10,11 während seines radialen Strahldurchtritts jeweils einen auswertbaren Teilstrahl ausblendet. Diese Teilstrahlen gelangen zwischen den Reflektorwänden 54 der Austeifungen 55 des Röhrchens 53 auf einen Umlenkspiegel 56, von dem aus sie durch eine Bohrung 57 in einen Detektor 58 gelangen. Die Meßnadel 53 ist mit ihren Aussteifungen 55 und einer Halterung 59 so verbunden, daß sie verdrehsicher im Träger 52 befestigt werden kann. Die Aussteifungen 55 können zugleich der unverschränkten Zuordnung des Reflektors 49 und des Umlenkspiegels 56 dienen. Die aus Fig.25 ersichtliche Schrägstellung des Röhrchens 53 bewirkt, daß der Laser und die Meßeinrichtung 51 strahlungsmäßig entkoppelt sind, daß also keine aus der Meßeinrichtung 51 herrührenden Reflexe zurück in den Laser gelangen.

Der Detektor 58 ist z.B. mit einem Pyrodetektor bestückt, mit denen die räumliche Anordnung der Intensitätszentren der Teilstrahlen der Strahlen 10,11 erkannt werden kann. Durch entsprechende Veränderung der Lage der Strahlen 10,11 unter Benutzung der Intensitätszentren gemäß Detektor 58 kann daher für die gewünschte Ausrichtung der Strahlen 10,11 und deren Fokussierung gesorgt werden.

Nach dem Erfassen der radialen Intensitätsverteilung beider Laserstrahlen 10,11 wird das zu bearbeitende Werkstück so angeordnet, daß die Bearbeitungsstelle relativ zur Meßstelle in gewünschter Weise angeordnet ist. Soll also ein Werkstück mit den beiden Laserstrahlen über seine Werkstückdicke jeweils zur Hälfte von jedem Laserstrahl bearbeitet werden, also beispielsweise geschweißt, so wird seine Mitte möglichst genau mit der Meßstelle 48 zur Deckung gebracht, was mit hinreichender Genauigkeit möglich ist, wenn man davon ausgeht, daß das Röhrchen 53 beispielsweise einen Durchmesser von 2 mm hat.

## Patentansprüche

1. Schweißverfahren mit Hochenergie-Schweißstrahlen, insbesondere mit Laserstrahlen, bei dem zwei gesteuerte Schweißstrahlen (10,11) gleichzeitig auf zwei einander gegenüberliegende Werkstückaußenflächen (13,14) einstrahlen und die Werkstückdicke (d) des Schweißbereichs (12) unter Dampfkapillarenbildung jeweils anteilig aufschmelzen, **dadurch gekennzeichnet**, daß die Schweißstrahlen (10,11) im Sinne der Bildung einer zwischen den Werkstückaußenflächen durchgängigen Dampfkapillare gesteuert werden, wobei mindestens einer (10 bzw. 11) dieser beiden Schweißstrahlen (10,11) mit einer kurzzeitigen Prozeßabläufen angepaßten Prozeßregelung in Bezug auf die Position der Dampfkapillare (15) des anderen (11 bzw. 10) der beiden dieselbe durchgängige Dampfkapillare bildenden Schweißstrahlen (10,11) gesteuert wird.

2. Verfahren nach Anspruch 1, **dadurch gekennzeichnet**, daß beide Schweißstrahlen (10,11) zur Erzielung eines geradlinigen Verlaufs der durchgängigen Dampfkapillaren (15) zwischen den Werkstückaußenflächen (13,14) entgegen der Schweißrichtung (xₛ) geneigt auf den Schweißbereich (12) einstrahlen.

3. Verfahren nach Anspruch 1 oder 2, **dadurch gekennzeichnet**, daß die Schweißstrahlen (10,11) zur Formung der Dampfkapillaren (15) örtlich und zeitlich aufeinander abgestimmt oszilliert und/oder moduliert werden.

4. Verfahren nach einem oder mehreren der Ansprüche 1 bis 3, **dadurch gekennzeichnet**, daß die Steuerung der Schweißstrahlen (10,11) in Abhängigkeit von durch die Dampfkapillare (15) hindurchtretender Strahlung (17') und/oder in den Strahlengang eingekoppelter Strahlung (18) anderer Wellenlänge erfolgt.

5. Verfahren nach einem oder mehreren der Ansprüche 1 bis 4, **dadurch gekennzeichnet**, daß eine Steuerung eines Schweißstrahls (10) nur dann erfolgt, wenn die Leistung der durch die Dampfkapillare (15) hindurchtretenden Strahlung (17',18) einen Bereich zwischen zwei vorgegebenen anwendungsspezifischen Schwellwerten verläßt.

6. Verfahren nach Anspruch 5, **dadurch gekennzeichnet**, daß bei einem Unterschreiten eines unteren Schwellwertes zunächst die Position des einen Schweißkopfes (16) gesteuert und dann bedarfsweise die Strahlleistung eines Schweißstrahls (10) oder beider Schweißstrahlen (10,11) erhöht wird.

7. Verfahren nach einem oder mehreren der Ansprüche 1 bis 6, **dadurch gekennzeichnet**, daß bei einem Überschreiten des oberen Schwellwertes die Schweißgeschwindigkeit erhöht und/oder die Strahlleistung eines Schweißstrahls (10) oder beider Schweißstrahlen (10,11) erniedrigt wird.

8. Verfahren nach einem oder mehreren der Ansprüche 1 bis 7, **dadurch gekennzeichnet**, daß die Durchgängigkeit der Dampfkapillaren (15) und/oder deren Position im Schweißbereich (12) und/oder Unregelmäßigkeiten der Schmelzbewegungen mittels Plasmafluktuationen überwacht werden.

9. Verfahren nach einem oder mehreren der Ansprüche 1 bis 8, **dadurch gekennzeichnet**, daß zur Detektion der durch die Dampfkapillare (15) hindurchtretenden Strahlung (17,18) ein strahlungsauskoppelnder Spiegel (24) verwendet wird.

10. Verfahren nach einem oder mehreren der Ansprüche 1 bis 9, **dadurch gekennzeichnet**, daß eine on-line-Prozeßüberwachung mit optischen und/oder akustischen Sensoren (45,46,47) erfolgt, die die Schweißnaht (22) hinter dem jeweiligen Schweißbereich (12) erfassen.

11. Verfahren nach einem oder mehreren der Ansprüche 1 bis 10, **dadurch gekennzeichnet**, daß die Position der Schweißstrahlen (10,11) in Abhängigkeit von der Ausbildung der Schweißnaht (22) und/oder deren Lage im verschweißten Werkstück (23) gesteuert wird.

12. Verfahren nach einem oder mehreren der Ansprüche 1 bis 11, **dadurch gekennzeichnet**, daß Ultraschall und/oder eine Messung der Wärmestrahlung der Schweißnaht (22) und/oder des verschweißten Werkstücks (23) für die Prozeßüberwachung eingesetzt wird.

13. Verfahren, insbesondere nach einem oder mehreren der Ansprüche 1 bis 12, **dadurch gekennzeichnet**, daß beim Schweißen mit Laserstrahlung, die im wesentlichen quer zur Schweißrichtung (xₛ) auf den Schweißbereich (12) der Werkstücke (23) gerichtet und gegen eine Werkstückaußenfläche (13,14) geneigt ist, polarisierte Laserstrahlung (17') verwendet wird, deren Polarisationsrichtung (p) mit der Schweißrichtung (xₛ) einen Winkel von etwa 45° einschließt.

14. Verfahren nach einem oder mehreren der Ansprüche 1 bis 13, **dadurch gekennzeichnet**, daß beide Schweißstrahlen (10,11) im Schweißbereich (12) gleich ausgerichteten elliptischen Querschnitt aufweisen.

15. Verfahren nach einem oder mehreren der Ansprüche 1 bis 14, **dadurch gekennzeichnet**, daß es zum Schweißen von T- und I-Stößen sowie von Überlapp- und Bördelnähten eingesetzt wird.

16. Verfahren nach einem oder mehreren der Ansprüche 1 bis 15, **dadurch gekennzeichnet**, daß die Werkstücke (23) an vorbestimmten Stellen vorgeheizt und/oder gekühlt werden.

17. Verfahren nach einem oder mehreren der Ansprüche 1 bis 16, **dadurch gekennzeichnet**, daß der herzustellenden Schweißnaht (22) Zusatzwerkstoff (25) zugeführt wird und/oder daß Werkstückteile (23) mit bartbehafteten Stoßkanten (26) zum Schweißen verwendet werden.

18. Verfahren nach einem oder mehreren der Ansprüche 1 bis 17, **dadurch gekennzeichnet**, daß T-Stöße mit senkrechtem Steg (27) und waagerechtem Gurt (28) bei etwa horizontal angeordneten Schweißstrahlen (10,11, 10',11') geschweißt werden.

19. Verfahren nach einem oder mehreren der Ansprüche 1 bis 18, **dadurch gekennzeichnet**, daß die Kühlung der Werkstücke (23) durch steg- und/oder gurtpositionierende, strömungsgekühlte Rollen (29) oder Walzen (30) erfolgt.

20. Verfahren insbesondere nach einem oder mehreren der Ansprüche 1 bis 19, **dadurch gekennzeichnet**, daß bei tropfgefährdeten Schweißbereichen (12) ein Stützgas (31) von unten auf den Schweißbereich (12) geblasen wird.

21. Verfahren nach einem oder mehreren der Ansprüche 1 bis 20, **dadurch gekennzeichnet**, daß der Schweißbereich (12) koaxial zum Schweißstrahl (10,11) mit Helium oder mit einem Gasgemisch mit Helium und/oder Wasserstoff beaufschlagt wird, und daß im Winkel zun Schweißstrahl Argon auf den Schweißbereich (12) geblasen wird.

22. Verfahren nach Anspruch 20 oder 21, **dadurch gekennzeichnet**, daß das Argongas von vor der Naht (22) auf den Schweißbereich (12) und bedarfsweise auf von hinten zugeführten Zusatzwerkstoff (25) geblasen wird.

23. Verfahren nach Anspruch 20 oder 21, **dadurch gekennzeichnet**, daß das Argongas von vor der Naht (22) in den Schweißspalt (44) und bedarfsweise auf in den Spalt (44) eingebrachten Zusatzwerkstoff (25) geblasen und dort von dem laserstrahlkoaxialen Gas (32) gehalten wird.

24. Verfahren insbesondere nach einem oder mehreren der Ansprüche 1 bis 23, **dadurch gekennzeichnet**, daß die Strahlen (10,11) vor einem Bearbeitungsvorgang auf eine Meßstelle (48) ausgerichtet werden, an der nach einem Meßvorgang eine zwischen den Werkstückaußenflächen (13,14) gelegene Bearbeitungsstelle des Werkstücks angeordnet wird, und daß an dieser Meßstelle (48) die radiale Intensitätsverteilung der beiden Strahlen (10,11) ermittelt wird.

## Claims

1. Welding process using high-energy welding beams, especially laser beams, in which two controlled welding beams (10, 11) are directed simultaneously onto two opposed external surfaces (13, 14) of a workpiece and the workpiece thickness (d) of the welding zone (12) melts proportionately with the formation of vapour capillaries, **characterised in that** the welding beams (10, 11) are controlled in the sense to form a vapour capillary which is continuous between the workpiece external surfaces, wherein at least one (10 or 11) of these two welding beams (10, 11) is controlled, by a process regulation matched to short-term process events, in relation to the position of the vapour capillary (15) of the other (11 or 10) of the two welding beams (10, 11) forming the said continuous vapour capillary.

2. Process according to claim 1, **characterised in that** both welding beams (10, 11) are directed onto the welding zone (12) at an angle relative to the welding direction (xₛ) in order to achieve a rectilinear course for the continuous vapour capillary (15) between the workpiece external surfaces (13, 14).

3. Process according to claim 1 or 2, **characterised in that** the welding beams (10, 11) for the formation of the vapour capillary (15) are oscillated and/or modulated, spatially and in time, in a coordinated manner.

4. Process according to one or more of claims 1 to 3, **characterised in that** the control of the welding beams (10, 11) is effected in dependence upon radiation (17') passing through the vapour capillary (15) and/or radiation (18) of other wavelengths coupled into the beam path.

5. Process according to one or more of claims 1 to 4, **characterised in that** a control of one welding beam (10) is only effected if the power of the radiation (17', 18) passing through the vapour capillary (15) departs from a range between two predetermined threshold values specific to the application.

6. Process according to claim 5, **characterised in that** if a lower threshold value is not achieved then first the position of the one welding head (16) is controlled and then, if necessary, the radiation energy of one welding beam (10) or both welding beams (10, 11) is increased.

7. Process according to one or more of claims 1 to 6, **characterised in that** if the upper threshold value is exceeded then the welding speed is increased and/or the radiation energy of one welding beam (10) or both welding beams (10, 11) is reduced.

8. Process according to one or more of claims 1 to 7, **characterised in that** the continuity of the vapour capillary (15) and/or its position in the welding zone (12) and/or irregularities in the movements of the melt due to plasma fluctuations are monitored.

9. Process according to one or more of claims 1 to 8, **characterised in that** a radiation-decoupling mirror (24) is used for the detection of the radiation (17, 18) passing through the vapour capillary (15).

10. Process according to one or more of claims 1 to 9, **characterised in that** an on-line process monitoring is effected by optical and/or acoustic sensors (45, 46, 47) which detect the weld seam (22) behind the particular welding zone (12).

11. Process according to one or more of claims 1 to 10, **characterised in that** the position of the welding beams (10, 11) is controlled in dependence upon the formation of the weld seam (22) and/or its position in the welded workpiece (23).

12. Process according to one or more of claims 1 to 11, **characterised in that** ultrasound and/or a measurement of the thermal radiation of the weld seam (22) and/or of the welded workpiece (23) is used for the process monitoring.

13. Process, particularly according to one or more of claims 1 to 12, **characterised in that** for welding with laser radiation, which is directed substantially transversely to the welding direction (xₛ) onto the welding zone (12) of the workpiece (23) and is inclined in relation to one workpiece external surface (13, 14), polarised laser radiation (17') is used whose polarisation direction (p) subtends an included angle of about 45° with reference to the welding direction (xₛ).

14. Process according to one or more of claims 1 to 13, **characterised in that** both welding beams (10, 11) have equally aligned elliptical cross-sections in the welding zone (12).

15. Process according to one or more of claims 1 to 14, **characterised in that** it is used for the welding of T-shaped and I-shaped butt joints as well as for the welding of overlapping seams and flange joints.

16. Process according to one or more of claims 1 to 15, **characterised in that** the workpiece (23) is preheated and/or cooled at predetermined positions.

17. Process according to one or more of claims 1 to 16, **characterised in that** material (25) additional to that for making the weld seam (22) is supplied and/or that workpiece components (23) with barbed butt edges (26) are used for the welding.

18. Process according to one or more of claims 1 to 17, **characterised in that** T-shaped joints with vertical web (27) and horizontal bar (28) are welded with approximately horizontal welding beams (10, 11, 10', 11').

19. Process according to one or more of claims 1 to 18, **characterised in that** the cooling of the workpiece (23) is effected by flow-cooled rollers (29) or drums (30) arranged to be positioned against the web and/or bar.

20. Process particularly according to one or more of claims 1 to 19, **characterised in that** in welding zones (12) where there is danger of dripping, a protective gas (31) is blown onto the welding zone (12) from below.

21. Process according to one or more of claims 1 to 20, **characterised in that** the welding zone is blasted coaxially with respect to the welding beam (10, 11) with helium or a gas mixture with helium and/or hydrogen, and that argon is blasted onto the welding zone (12) at an angle to the welding beam.

22. Process according to claim 20 or 21, **characterised in that** the argon gas is blasted from in front of the seam (22) into the welding zone (12) and, as necessary, onto added material (25) supplied from the rear.

23. Process according to claim 20 or 21, **characterised in that** the argon gas is blasted from in front of the seam (22) into the weld gap (44) and, as necessary, onto added material (25) introduced into the gap (44), and there is supported by the gas (32) which is coaxial with the laser radiation.

24. Process particularly according to one or more of claims 1 to 23, **characterised in that** the beams (10, 11) before a processing treatment are directed to a measuring position (48) at which after a measuring process an operating position of the workpiece lying between the workpiece external surfaces (13, 14) is arranged, and that at this measuring position (48) the radial intensity distribution of the two beams (10, 11) is determined.

## Revendications

1. Procédé de soudage à l'aide de faisceaux de soudage à haute énergie, en particulier à l'aide de faisceaux laser, selon lequel deux faisceaux de soudage commandés (10, 11) arrivent simultanément sur deux surfaces extérieures de pièce opposées (13, 14) et font fondre proportionnellement l'épaisseur de pièce (d) de la zone de soudage (12) en formant un capillaire de vapeur, **caractérisé** en ce que les faisceaux de soudage (10, 11) sont commandés dans le sens de la formation d'un capillaire de vapeur continu allant d'une surface extérieure de la pièce à l'autre, l'un au moins (10 ou 11) de ces deux faisceaux de soudage (10, 11) étant commandé à l'aide d'une régulation de procédé adaptée à des opérations temporaires en ce qui concerne la position du capillaire de vapeur (15) de l'autre (11 ou 10) faisceau de soudage formant le même capillaire de vapeur continu.

2. Procédé selon la revendication 1, **caractérisé** en ce que les deux faisceaux de soudage (10, 11) arrivent sur la zone de soudage (12) en étant inclinés vers le sens de soudage (xₛ) afin de former des capillaires de vapeur continus (15) rectilignes entre les surfaces extérieures de pièce (13, 14).

3. Procédé selon la revendication 1 ou 2, **caractérisé** en ce que les faisceaux de soudage (10, 11) sont soumis à une oscillation et/ou une modulation en étant accordés l'un par rapport à l'autre dans l'espace et dans le temps afin de former les capillaires de vapeur (15).

4. Procédé selon l'une au moins des revendications 1 à 3, **caractérisé** en ce que la commande des faisceaux de soudage (10, 11) a lieu en fonction d'un rayonnement (17') qui traverse le capillaire de vapeur (15) et/ou d'un rayonnement (18) d'une autre longueur d'onde couplé dans le trajet du faisceau.

5. Procédé selon l'une au moins des revendications 1 à 4, **caractérisé** en ce qu'une commande d'un faisceau de soudage (10) n'a lieu que lorsque la puissance du rayonnement (17', 18) traversant le capillaire de vapeur (15) quitte une zone située entre deux valeurs seuils spécifiques à l'application et prédéfinies.

6. Procédé selon la revendication 5, **caractérisé** en ce que lorsqu'on arrive au-dessous d'une valeur seuil inférieure, la position d'une tête de soudage (16) est tout d'abord commandée puis la puissance d'un faisceau de soudage (10) ou des deux faisceaux de soudage (10, 11) est augmentée au besoin.

7. Procédé selon l'une au moins des revendications 1 à 6, **caractérisé** en ce que lorsqu'on dépasse la valeur seuil supérieure, la vitesse de soudage est augmentée et/ou la puissance d'un faisceau de soudage (10) ou des deux faisceaux de soudage (10, 11) est réduite.

8. Procédé selon l'une au moins des revendications 1 à 7, **caractérisé** en ce que la continuité des capillaires de vapeur (15) et/ou leur position dans la zone de soudage (12) et/ou les irrégularités des déplacements de fusion sont surveillés à l'aide de fluctuations de plasma.

9. Procédé selon l'une au moins des revendications 1 à 8, **caractérisé** en ce que pour détecter le rayonnement (17, 18) qui traverse le capillaire de vapeur (15), on utilise des miroirs de sortie de rayonnement (24).

10. Procédé selon l'une au moins des revendications 1 à 9, **caractérisé** en ce qu'une surveillance en ligne de l'opération a lieu à l'aide de capteurs optiques et/ou acoustiques (45, 46, 47) qui enregistrent le cordon de soudure (22) derrière la zone de soudure (12) correspondante.

11. Procédé selon l'une au moins des revendications 1 à 10, **caractérisé** en ce que la position des faisceaux de soudage (10, 11) est commandée en fonction de la forme du cordon de soudure (22) et/ou de sa situation dans la pièce soudée (23).

12. Procédé selon l'une au moins des revendications 1 à 11, **caractérisé** en ce qu'on utilise des ultrasons et/ou une mesure du rayonnement thermique du cordon de soudure (22) et/ou de la pièce soudée (23) pour la surveillance de l'opération.

13. Procédé en particulier selon l'une au moins des revendications 1 à 12, **caractérisé** en ce que dans le cas du soudage avec un rayonnement laser qui est dirigé vers la zone de soudage (12) des pièces (23) globalement transversalement par rapport au sens de soudage (xₛ) et qui est incliné vers une surface extérieure de pièce (13, 14), on utilise un rayonnement laser polarisé (17') dont le sens de polarisation (p) définit avec le sens de soudage (xₛ) un angle d'environ 45°.

14. Procédé selon l'une au moins des revendications 1 à 13, **caractérisé** en ce que les deux faisceaux de soudage (10, 11) présentent dans la zone de soudage (12) une section transversale elliptique orientée de la même façon.

15. Procédé selon l'une au moins des revendications 1 à 14, **caractérisé** en ce qu'il est mis en oeuvre pour le soudage de joints en T et en I et de cordons de soudure à recouvrement et à bords relevés.

16. Procédé selon l'une au moins des revendications 1 à 15, **caractérisé** en ce que les pièces (23) sont préchauffées et/ou refroidies à des endroits prédéfinis.

17. Procédé selon l'une au moins des revendications 1 à 16, **caractérisé** en ce qu'un matériau d'apport (25) est amené vers le cordon de soudure à réaliser (22) et/ou en ce que des parties de pièce (23) pourvues de rebords barbus (26) sont utilisés pour le soudage.

18. Procédé selon l'une au moins des revendications 1 à 17, **caractérisé** en ce que des joints en T formés d'une barre verticale (27) et d'une semelle horizontale (28) sont soudés avec des faisceaux de soudage (10, 11, 10', 11') disposés à peu près à l'horizontale.

19. Procédé selon l'une au moins des revendications 1 à 18, **caractérisé** en ce que le refroidissement des pièces (23) se fait grâce à des rouleaux (29) ou des cylindres (30) refroidis à l'aide d'un courant et positionnés par rapport aux barres et/ou aux semelles.

20. Procédé en particulier selon l'une au moins des revendications 1 à 19, **caractérisé** en ce que dans le cas de zones de soudage (12) risquant de goutter, un gaz de support (31) est injecté par le bas sur la zone de soudage (12).

21. Procédé selon l'une au moins des revendications 1 à 20, **caractérisé** en ce que la zone de soudage (12) est sollicitée coaxialement par rapport au faisceau de soudage (10, 11) à l'aide d'hélium ou d'un mélange gazeux contenant de l'hélium et/ou de l'hydrogène, et en ce que de l'argon est injecté sur la zone de soudage (12) suivant un certain angle par rapport au faisceau de soudage.

22. Procédé selon la revendication 20 ou 21, **caractérisé** en ce que le gaz argon est injecté sur la zone de soudage (12) à partir d'une zone située devant le cordon (22), et au besoin sur un matériau d'apport (25) amené par derrière.

23. Procédé selon la revendication 20 ou 21, **caractérisé** en ce que le gaz argon est injecté dans l'interstice de soudage (44) à partir d'une zone située devant le cordon (22), et au besoin sur un matériau d'apport (25) introduit dans l'interstice (44), et il est maintenu à cet endroit par le gaz (32) coaxial par rapport au faisceau laser.

24. Procédé en particulier selon l'une au moins des revendications 1 à 23, **caractérisé** en ce que les faisceaux (10, 11) sont alignés avant une opération d'usinage sur un point de mesure (48) au niveau duquel un point d'usinage de la pièce situé entre les surfaces extérieures de pièce (13, 14) est disposé après une opération de mesure, et en ce que la répartition d'intensité radiale des deux faisceaux (10, 11) est déterminée au niveau de ce point de mesure (48).
